Europäisches Patentamt

European Patent Office

Office européen des brevets

(19)

(11) Veröffentlichungsnummer : **0 111 487**
**B1**

(12) **EUROPÄISCHE PATENTSCHRIFT**

(45) Veröffentlichungstag der Patentschrift :
30.12.86

(51) Int. Cl.⁴ : **F 02 B 29/04**

(21) Anmeldenummer : 83900272.2

(22) Anmeldetag : 11.01.83

(86) Internationale Anmeldenummer :
PCT/EP 83/00004

(87) Internationale Veröffentlichungsnummer :
WO/8302481 (21.07.83 Gazette 83/17)

(54) AUFGELADENE BRENNKRAFTMASCHINE MIT LADELUFTWÄRMETAUSCHER.

(30) Priorität : 13.01.82 DE 3200683
13.01.82 DE 3200691
13.01.82 DE 3200689
13.01.82 DE 3200685

(43) Veröffentlichungstag der Anmeldung :
27.06.84 Patentblatt 84/26

(45) Bekanntmachung des Hinweises auf die Patenterteilung : 30.12.86 Patentblatt 86/52

(84) Benannte Vertragsstaaten :
AT DE FR GB SE

(56) Entgegenhaltungen :
DE-A- 2 441 873
DE-A- 3 003 573
DE-B- 2 602 530
DE-B- 2 857 314
FR-A- 2 400 162
GB-A- 1 153 655
GB-A- 2 001 128
US-A- 1 371 444
US-A- 3 144 749

(73) Patentinhaber : Klöckner-Humboldt-Deutz Aktiengesellschaft
Deutz-Mülheimer-Strasse 111 Postfach 80 05 09
D-5000 Köln 80 (DE)

(72) Erfinder : THOLEN, Paul
Im Lüh 19
D-5060 Bergisch Gladbach (DE)

Jouve, 18, rue St-Denis, 75001 Paris, France

**Beschreibung**

Die Erfindung bezieht sich auf eine aufgeladene Brennkraftmaschine nach dem Oberbegriff des Anspruchs 1.

Eine derartige Brennkraftmaschine mit einem Ladeluftkühler (Wärmetauscher) ist aus der DE-A-2 441 873 bekannt. Der Ladeluftkühler ist mit Wasser als Wärmeaustauschmedium beschickt. Zur Kühlung der Ladeluft im oberen Lastbereich ist der Wärmetauscher mit einer außen liegenden Kältequelle, z. B. Kühlwasser, über entsprechende Zuleitungen verbunden. Im unteren Lastbereich wird der Ladeluftkühler über Ventile mit einer Wärmequelle, z. B. heißes Wasser, verbunden, wodurch eine Erwärmung der Ladeluft erzielt ist.

Durch die Kühlung der Ladeluft wird eine größere Zylinderfüllung bewirkt, was zu einer höheren Leistung der Brennkraftmaschine führt. Darüber hinaus hat eine Ladeluftkühlung aber auch eine günstige Wirkung auf den Kraftstoffverbrauch und die Abgasqualität, insbesondere auf die Rauchentwicklung, und geht einher mit einer Senkung der thermischen und mechanischen Belastung der Brennkraftmaschine und aller den Brennraum begrenzenden Bauteile. Dies betrifft beispielsweise bei schnellen Laständerungen insbesondere den Abbau thermischer Wechselspannungen. Durch die Vorwärmung der Ladeluft kann ferner die Weißrauchneigung der Brennkraftmaschine günstig beeinflußt werden.

Zur Erzielung der vorstehenden Verbesserungen ist ein erheblicher Aufwand notwendig. Bei Flüssigkeitskühlung ist der übliche Wärmetauscher zu vergrößern. Ferner ist bei Rückkühlung mittels Umgebungsluft in geeigneter Weise und Menge Kühlluft zu fördern. Die Anordnung solcher Ladeluftkühler bedingen daher einen hohen Leitungsaufwand und benötigen ein erhebliches Bauvolumen, das nicht immer ausreichend zur Verfügung steht. Auch längere Luftleitungen zur Vergrößerung des Einbauraums müssen vermieden werden, da sich lange Luftleitungen ungünstig auf das Betriebsverhalten der Brennkraftmaschine auswirken.

Der Erfindung liegt die Aufgabe zugrunde für aufgeladene Brennkraftmaschinen ein Ladeluftkühlsystem vorzuschlagen, das baulich einfach herstellbar ist und bei dem aufwendige Maßnahmen in Form von besonderen Anschlüssen am Ladeluftkühlsystem zur Vorwärmung der Verbrennungsluft unter Beibehaltung einer Vorwärmmöglichkeit weitgehend verzichtet werden kann.

Diese Aufgabe wird erfindungsgemäß durch die kennzeichnenden Merkmale des ersten Anspruchs gelöst. Die Erfindung basiert auf dem Grundgedanken, die Speicherwärme eines geeigneten Arbeitsmediums für den Wärmetauscher heranzuziehen, soweit diese Wärme von der Ladeluft selbst geliefert wird. Dies bedeutet, daß der Wärmetauscher neben den Passagen für die Ladeluft noch Passagen für ein Arbeitsmedium enthält, das je nach seinem Temperaturzustand der Verbrennungsluft Wärme entzieht bzw. ihr Wärme zuführt, wobei das Arbeitsmedium selbst in keinem gezielten äußeren Wärmeaustausch steht. Der erfindungsgemäße Wärmetauscher kann daher an der Brennkraftmaschine freizügiger angeordnet werden, da seine Anordnung lediglich nach den Belangen der Verbrennungsluftführung festgelegt ist.

Die Vergleichmäßigung der Verbrennungsluft, d. h. Erniedrigung der Verbrennungslufttemperatur bei hoher Last und Erhöhung der Verbrennungslufttemperatur bei niedriger Last bewirkt aufgrund des verbesserten Kraftstoff/Luftverhältnisses bei allen Beschleunigungsvorgängen eine höhere Leistung, einen günstigeren Kraftstoffverbrauch, eine verbesserte Abgasqualität und führt zu einer Entlastung der mechanischen und thermischen Spannungen, wie sie insbesondere bei schnellen Lastwechseln auftreten. Dies führt im Ergebnis zu einer Verlängerung der Lebensdauer der Brennkraftmaschine. Die Wirkung ist unabhängig von der Kühlungsart der Brennkraftmaschine und ihrer Regelung.

Im Betrieb wird sich das Arbeitsmedium auf eine Temperatur einstellen, deren mittlerer Wert sich aus dem Lastkollektiv der Brennkraftmaschine und damit als Mittelwert der Temperaturen der durchströmten Verbrennungsluft ergibt. Bezogen auf die schnelle Temperaturänderung der Verbrennungsluft wird sich die Temperatur des Arbeitsmediums wegen seines größeren Wärmeinhalts wesentlich langsamer ändern. Bei spontanen Laständerungen wirkt das Arbeitsmedium daher quasi-stationär in ähnliche Weise wie ein dauernd vom Kühlwasser durchströmter Wärmetauscher. Erst bei länger andauernden Vorgängen wird sich die Temperatur des Arbeitsmediums der Verbrennungslufttemperatur angleichen, so daß dann ein Wärmetausch nicht mehr stattfinden kann. Der zeitliche Verlauf der Temperaturänderung der Verbrennungsluft ist durch die Größe des Wärmetauschers und die Menge und Art des Arbeitsmediums beeinflußbar.

Bei Brennkraftmaschinen, bei deren Einsatz aufgrund der Betriebsweise nur eine kurzzeitige Überlast möglich ist, kann auch ohne weiteres eine Überlast zugelassen werden. Dies trifft z. B. bei der kurzzeitigen Überlastbarkeit von Aggregaten zu, insbesondere bei Sofortbereitschaftsaggregate. In vielen Einsatzfällen wird eine Kühlung der Ladeluft nur für sehr kurze Zeit benötigt. Dies gilt bei den meisten Pkw- und leichten Lkw-Brennkraftmaschinen im innerstädtischen Verkehr, aber auch für Brennkraftmaschinen im Baggereinsatz, in Hubstaplern und in anderen Geräten. In solchen Fällen ist eine Aufrechterhaltung der Ladeluftkühlung über längere Zeit gar nicht notwendig, so daß die Maßnahmen auf eine Kurzzeitwirkung beschränkt bleiben können. So entspricht bei Beschleunigungsvorgängen für Pkw und Lkw — bei Überholvorgängen und an kurzen Steigungen — die Wirkungsweise der erfindungsgemäßen Anordnung der eines üblichen Ladeluftkühlers, so daß die Einspritzmenge während des Beschleunigungsvorganges deutlich angehoben werden kann.

Auch ist über die kurzen Leerlaufintervalle eine Vorwärmung der Verbrennungsluft gewährleistet. Bei einfachem und preiswertem Aufbau und Einbau ist die Wirksamkeit des erfindungsgemäßen Wärmetauschers identisch mit einem bekannten, flüssigkeitsdurchströmten Wärmetauscher. Mit geringerem Aufwand wird eine Vergleichmäßigung der Verbrennungslufttemperatur bei allen Übergangszuständen erzielt. Der erfindungsgemäß ausgestaltete Wärmetauscher kann ferner auch nachträglich — in der Regel sogar ohne größere Änderungen an der Brennkraftmaschine — installiert werden.

Selbst bei länger andauernder Vollast oder Leerlauf kann kein negativer Einfluß auf den Betrieb der Brennkraftmaschine stattfinden, wenn sie keine höhere Dauerleistung als eine Brennkraftmaschine ohne Kühlung der Verbrennungsluft aufweist.

Als wärmetauschendes Medium kann in einfacher Weise Wasser, das gegebenenfalls mit einem Frostschutzmittel gemischt ist, benutzt werden. Wird hierbei der Wärmetauscher auf der Wasserseite hermetisch abgeschlossen, ist die gesamte Anordnung praktisch wartungs- und verschleißfrei. Hierbei sollte auf der Wasserseite allerdings ein Gaspolster zur Aufnahme der mit der Erwärmung und Abkühlung auftretenden Druckschwankungen vorgesehen werden.

Als Arbeitsmedium wird ein Medium höherer Wärmespeicherkapazität vorgeschlagen. Dies ist beispielsweise dann gegeben, wenn das gewählte Medium im Arbeitstemperaturbereich als Latentspeicher arbeitet, das einen Phasenwechsel oder einen mit einer chemischen Reaktion verbundenen Wärmeumsatz aufweist. Ein solches Mittel ist beispielsweise Stearin, dessen Phasenwechsel bei etwa 52 °C liegt. Oberhalb dieser Temperatur schmilzt es und unterhalb wird es fest, wobei die Schmelzwärme bzw. die Verflüssigungswärme etwa 130 Ws/m³ beträgt (31 Kcal/Liter). Dieses Mittel eignet sich daher in besonderem Maße als Arbeitsmedium für die vorgesehene Temperaturnivellierung. Dazu ist allerdings erforderlich, daß der Wärmetausch zwischen dem Stearin einerseits und der an den seitlichen Wandungen vorbeigeführten Ladeluft andererseits konzentriert stattfinden kann. Es muß also Vorsorge getroffen werden, daß sowohl an der Verbrennungsluftseite als auch auf der Arbeitsmediumsseite unter allen Bedingungen hohe Wärmeübergangszahlen bestehen. Die bei luftgekühlten Brennkraftmaschinen üblichen Öl/Luftwärmetauscher mit Ölscheiden, deren Oberfläche durch metallisch mit den Trennwänden verbundene Kühllamellen wesentlich vergrößert sind und die zudem geeignet sind, Druckspannungen in den Scheiben aufzunehmen, sind konstruktiv besonders hierfür geeignet. Vorteilhaft ist neben einer Füllung mit Stearin auch eine Füllung mit Glyzerin, da es im relevanten Temperaturbereich eine hohe Latentwärme besitzt.

Anstelle von Stearin oder Glyzerin ist als Arbeitsmedium auch ein Salzhydrat, wie beispielsweise Kaliumfluorit-Tetrahydrat ($KF \cdot 4H_2O$), dessen Schmelzwärme bei 18,5 °C entsprechend 336 Ws/cm³ beträgt, einsetzbar. Es entspricht mit diesem Wert fast genau der Schmelzwärme des Wassers, die allerdings bei einem noch niedrigeren Wert, nämlich bei 0 °C, zur Verfügung steht. Daher eignet sich dieses Hydrat besonders bei Einsätzen mit niedrigen Außentemperaturen und für Betrieb mit längeren Teillastperioden, damit das Arbeitsmedium auch bis unter die Umwandlungstemperatur abkühlen kann. Vorteilhaft ist hierbei auch die sehr geringe Volumenänderung beim Phasenwechsel. Günstige Voraussetzungen bringen auch $Na_2SO_4 \cdot 10H_2O$ (Glaubersalz) [Phasenwechsel bei + 32,4 °C Schmelzwärme 354 Ws/cm³] und Natriumhydrogenphosphat ($Na_2HPO_4 \cdot 12H_2O$) [Phasenwechsel bei 35,2 °C, Schmelzwärme 403 Ws/cm³] mit.

In Ausgestaltung der Erfindung ist es vorteilhaft, Adsorptionsspeicher zu verwenden, bei denen die Verdampfungswärme des beteiligten Stoffes gespeichert wird.

Um einen hohen Wärmeübergang zu erzielen, sind die Wände der Wärmeaustauschelemente verrippt und bestehen aus einem Material mit hoher Wärmeleitfähigkeit, vorzugsweise aus Kupfer oder verzinnten Eisenplatten.

Vorteilhaft lassen sich kreisförmige oder spiralförmige Rippenrohre — je nach Einbausituation auf der Luftseite längs- oder querverrippt —, die vorzugsweise innen mit dem Arbeitsmedium gefüllt sind, verwenden. Die Rohre können außen und innen verrippt sein. Eine Verrippung auf der Seite des Arbeitsmediums ist erforderlich, wenn der Wärmeübergang an der Wandung dies verlangt (z. B. bei Öl, bei Stearin oder den Hydraten).

Zur Verzögerung der Speicherkapazität des Wärmetauschers werden in Ausgestaltung der Erfindung die Wärmeaustauschelemente mit zumindest einem vorzugsweise innerhalb des Wärmetauschers angeordneten und mit dem Arbeitsmedium gefüllten Zusatzbehälter verbunden. Durch das im Zusatzbehälter eingeschlossene Arbeitsmedium wird bei gleicher Wärmeaustauschfläche der Anwendungsbereich des Wärmetauschers auf länger andauernde Vollast- und Teillastperioden erweitert. Eine Umwälzung des Arbeitsmediums stellt dabei allein schon die durch die unterschiedlichen Temperaturen im Wärmetauscher und im Zusatzbehälter bedingte Thermosyphonwirkung in ausreichendem Maße sicher. Auch eine temperaturgeregelte Umwälzpumpe kann zweckmäßig sein.

In einer besonders raumsparenden Ausgestaltung der Erfindung wird vorgeschlagen, die Ladeluftsammelleitung selbst als Wärmetauscher auszubilden. Hierzu ist die Ladeluftsammelleitung ganz oder teilweise doppelwandig ausgebildet, wobei im Zwischenraum der Doppelwandungen das Arbeitsmedium eingeschlossen ist. Eine alternative oder zusätzliche Möglichkeit zu der doppelwandigen Ausbildung besteht darin, innerhalb der Ladeluftsammelleitung parallel oder quer zu ihrer Längsachse mit dem Arbeitsmedium gefüllte Rippenrohre vorzusehen. Hierbei kann in vorteilhafter Weise auf einen besonderen Wärmetauscher verzichtet werden, wobei grundsätzlich ebenfalls die Möglichkeit besteht, den Zwischenraum oder die Rippenrohre an einen gegebenenfalls mit einer Umwälzpumpe versehenen Zusatzbehälter anzuschließen. Es ist ebenfalls möglich, falls Zwischenraum und Rippenrohr additiv vorhanden sind, diese miteinander zu verbinden. Die Ladeluftsammelleitung besteht bevorzugt aus einem Werkstoff hoher Wärmekapazität, insbesondere Grauguß, und ist zwecks rationeller Montage und Fertigung bevorzugt zweistückig ausgebildet.

Ausführungsbeispiele der Erfindung sind anhand schematischer Darstellungen nachstehend näher erläutert. Es zeigen :

Figur 1 eine Seitenansicht einer aufgeladenen Brennkraftmaschine mit einem erfindungsgemäß gestalteten Wärmetauscher ;

Figur 2a eine Innenansicht im Schnitt des Wärmetauschers in einer ersten Ausführungsform ;

Figur 2b einen Schnitt durch einen kreiszylindrisch aufgebauten Wärmetauscher ;

Figuren 3a bis c einen Rippenrohrwärmetauscher in einer ersten Ausführungsform ;

Figuren 4a bis d Rippenrohrwärmetauscher in weiteren Ausführungsformen ;

Figuren 5a bis c Rippenrohrwärmetauscher mit kreisförmigen oder spiralförmigen Rohren ;

Figuren 6a bis c einen erfindungsgemäßen Wärmetauscher mit Zusatzbehälter in drei verschiedenen Ansichten ;

Figuren 7a und b Schaubilder für Temperatur/Zeitverhalten des erfindungsgemäßen Wärmetauschers mit unterschiedlichen Arbeitsmedien ;

Figur 8a eine Seitenansicht einer erfindungsgemäß gestalteten Ladeluftsammelleitung für eine Dreizylinder-Brennkraftmaschine im Schnitt ;

Figur 8b einen Querschnitt durch eine Ladeluftsammelleitung nach Fig. 8a ;

Figuren 9a bis c schematisch eine erfindungsgemäß gestaltete Ladeluftsammelleitung für eine Sechszylinder-Brennkraftmaschine in jeweils einer Seitenansicht, in einem Querschnitt und in einer Vorderansicht.

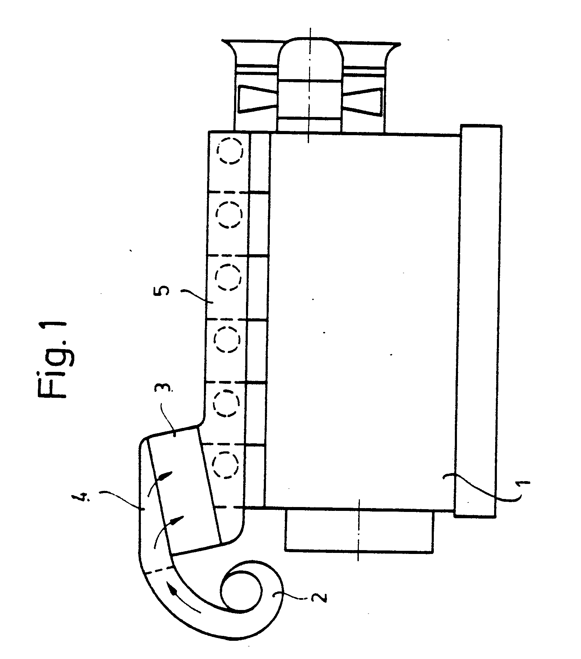

In Fig. 1 ist eine Seitenansicht einer aufgeladenen Brennkraftmaschine dargestellt. Mit 1 ist die Brennkraftmaschine selbst, mit 2 der Verdichter eines nicht weiter dargestellten Abgasturboladers, mit 3 der Wärmetauscher, mit 4 die Luftführung zwischen dem Verdichter 2 und dem Wärmetauscher 3 und mit 5 die Ladeluftsammelleitung von dem Wärmetauscher 3 zu dem Zylinderkopf bzw. den Zylinderköpfen bezeichnet. Beschrieben ist die Erfindung in Fig. 1 am Beispiel einer luftgekühlten Brennkraftmaschine mit Einzelzylinderköpfen.

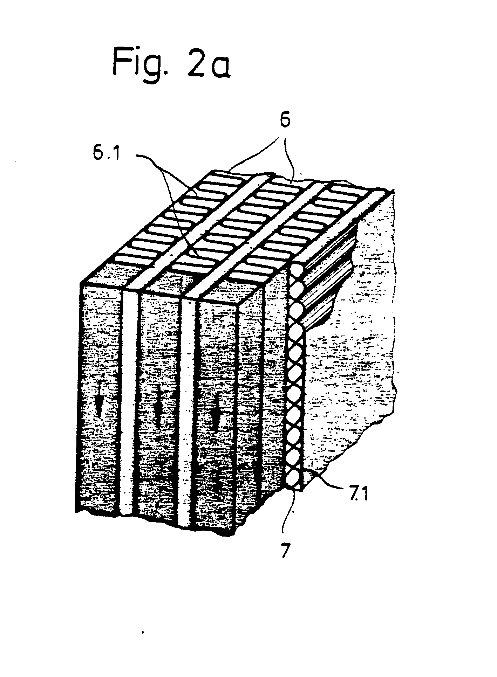

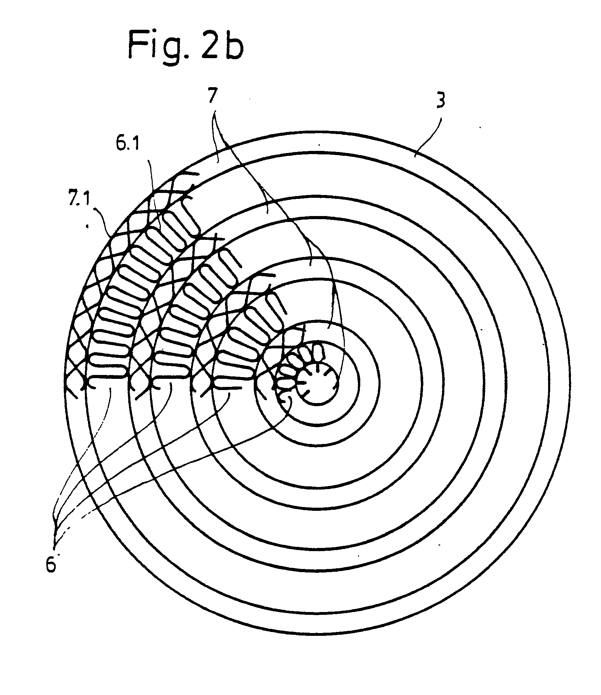

Einige mögliche Aufbauformen des erfindungsgemäßen Wärmetauschers 3 sind in in den Fig. 2 bis 5 dargestellt. Als Arbeitsmedium kann der Wärmetauscher 3 nach Fig. 2 bis 5 eine Wasserfüllung, Stearin- oder Hydratfüllung aufweisen.

Der Wärmetauscher 3 nach Fig. 1 weist Führungskanäle 6 für die Verbrennungsluft auf in der Luftlamellen 6.1 vorgesehen sind, die parallel zu der Strömungsrichtung der Verbrennungsluft verlaufen (Fig. 2), zwischen den Führungskanälen 6 sind in an sich bekannter Weise Scheiden 7 für das Arbeitsmedium angeordnet.

In den Scheiden 7 können zur Erhöhung des Wärmeübergangs und der Druckfestigkeit Lamellen 7.1 angeordnet sein. Während der Wärmetauscher 3 in Fig. 2a als kastenförmiger Plattenwärmetauscher aufgebaut ist, ist der Wärmetauscher 3 in Fig. 2b als kreiszylindrischer Scheidenwärmetauscher aufgebaut. Diese Form hat den Vorteil, daß sie sich leichter in die Luftführung 4 einbauen läßt.

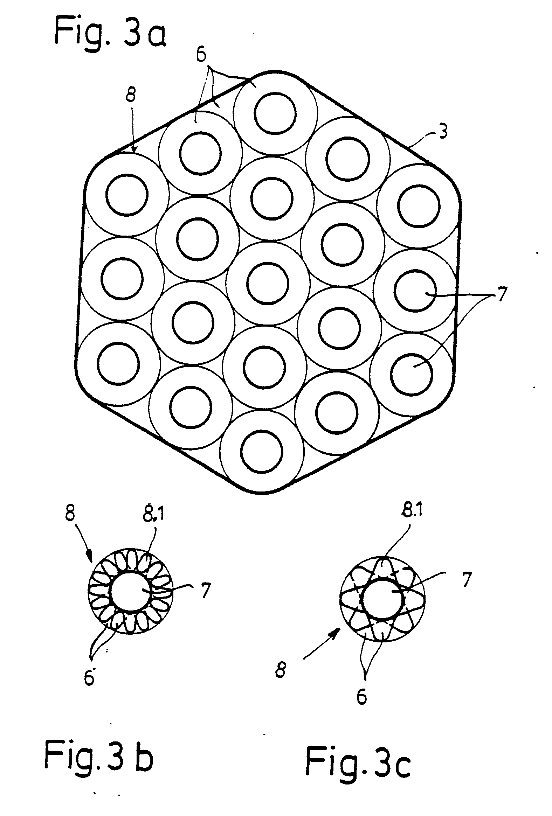

In den Fig. 3 bis 5 sind anstelle von Plattenwärmetauschern Wärmetauscher aus Rippenrohren gezeigt. Der Wärmetauscher 3 nach Fig. 3a hat die Form eines Sechsecks mit gerundeten Ecken. In ihm sind einzelne Rippenrohre 8 achsparallel zueinander eingeschoben. Jedes Rippenrohr 8 weist eine Außenverrippung aus entweder einfachen, gegebenenfalls geschlitzten Luftlamellen 8.1 oder aus Doppellamellen mit versetzter Anordnung (Fig. 3b, c) auf. Die Verbrennungsluft wird in dem Wärmetauscher 3 zwischen den Luftlamellen der einzelnen Rippenrohre 8 und den Zwischenräumen zwischen den einzelnen Rippenrohren 8 geführt. Jedes Rippenrohr ist mit dem Arbeitsmedium gefüllt. Alle Rippenrohre 8 sind untereinander über beidseitige Ausgleichsbehälter verbunden. Die Verbrennungsluft wird hierbei parallel zu den Rohrlängsachsen geführt.

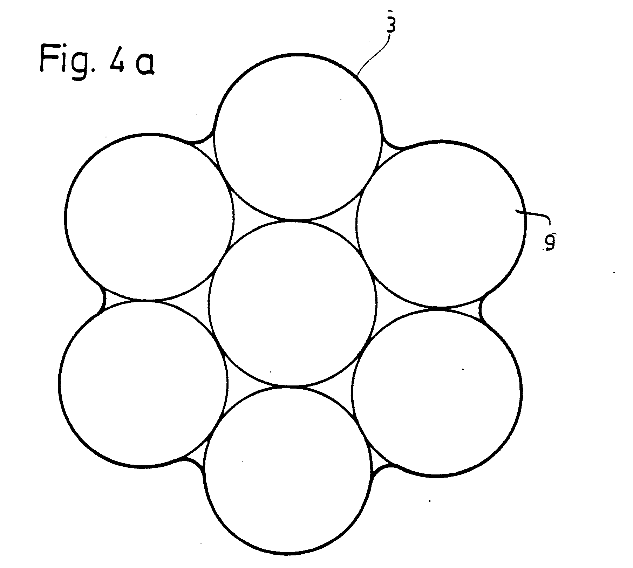

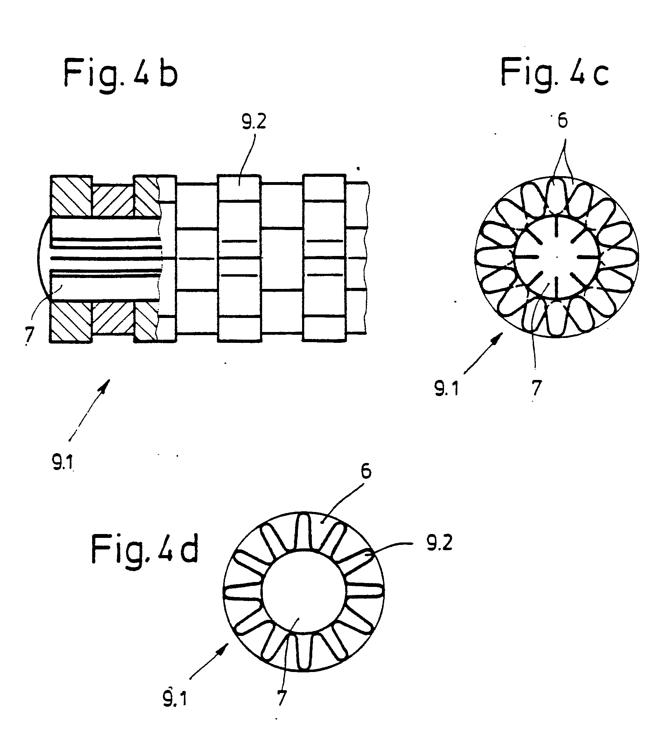

In Fig. 4a ist ein aus einzelnen Rohren 9 aufgebauter Wärmetauscher 3 dargestellt, in denen die Verbrennungsluft achsparallel strömt. In diese Rippenrohre 9 können die in Fig. 4b bis d dargestellten Rippenrohre 9.1, die mit Arbeitsmedium gefüllt sind, eingeschoben und befestigt werden. Die Rippenrohre 9.1 sind außen (Fig. 4d) oder auch innen (Fig. 4b, c) querverrippt, je nach Anforderung. Auch hierbei können die Luftlamellen 9.2 als Einfach- oder Doppellamelle aufgebaut sein. Die Anordnung der einzelnen Lamellen zeigt beispielsweise Fig. 4d, welche einen teilweise aufgebrochenen Längsschnitt eines Rippenrohres 9.1 darstellt.

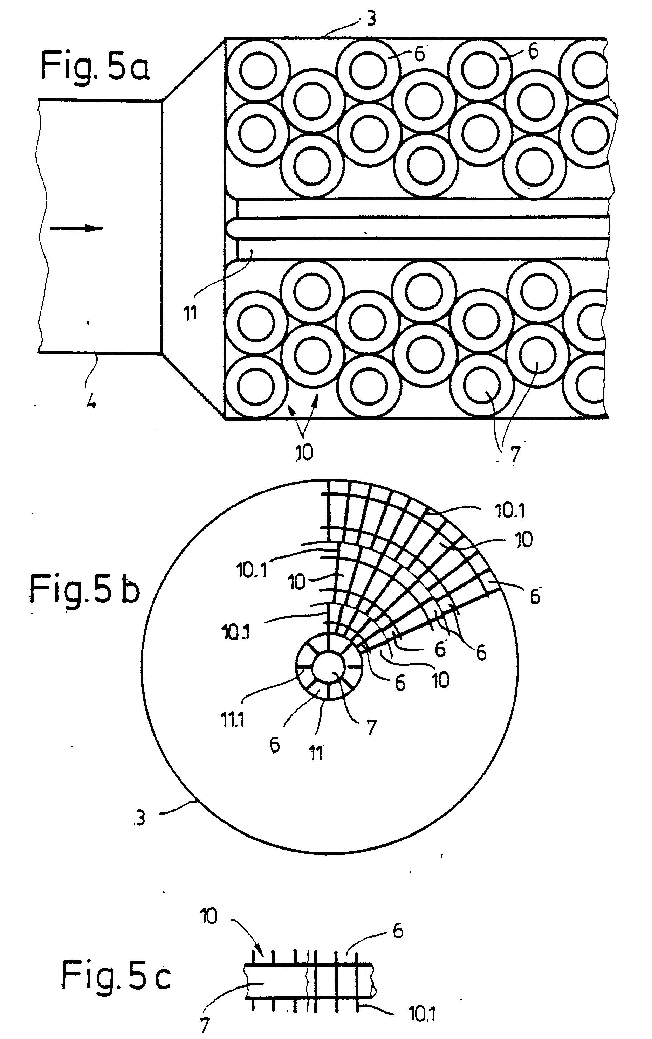

In Fig. 5a bis c ist ebenfalls ein Rippenrohrwärmetauscher dargestellt, bei dem jedoch die Rippenrohre 10 kreis- oder spiralförmige um die Wärmetauscherlängsachse, parallel zu der auch die Verbrennungsluft strömt, angeordnet sind. Je nach Erfordernissen kann auch in der Wärmetauscherlängsachse ein Rippenrohr 11 konzentrisch angeordnet werden. Die Rippenrohre 10 weisen auch hier eine Querverrippung 10.1 zur Führung der Verbrennungsluft auf. Nur das gegebenenfalls vorhandene Rippenrohr 11 weist eine Außenlängsverrippung 11.1 zur Führung der Verbrennungsluft auf.

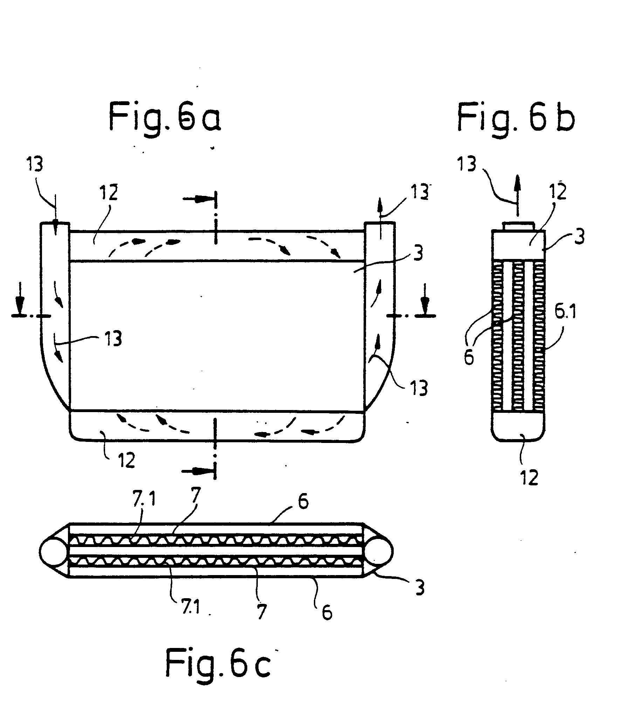

Fig. 6a zeigt eine Seitenansicht des erfindungsgemäßen Wärmetauschers 3 mit Zusatzbehälter 12. Die Verbrennungsluft durchströmt in Pfeilrichtung 13 den Wärmetauscher 3. Die unterschiedlichen Temperaturen bedingen eine Thermosyphonwirkung, wodurch das Arbeitsmedium umgewälzt wird.

Der Wärmetauscher nach Fig. 6a ist in Fig. 6b in einer geschnittenen Vorderansicht und in Fig. 6c im Querschnitt dargestellt.

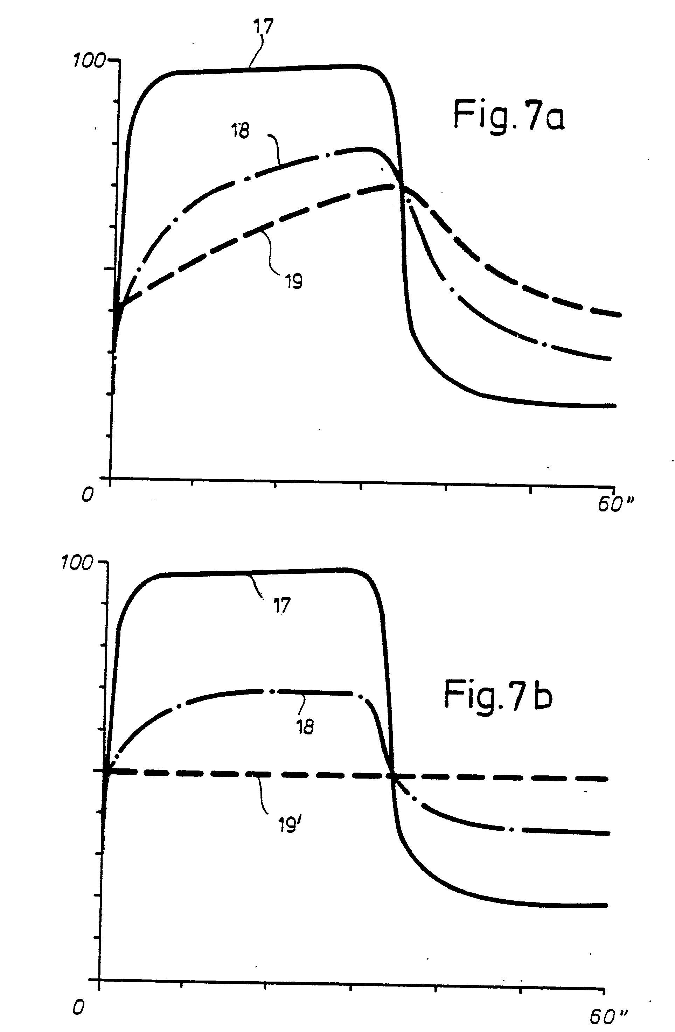

In Fig. 7a, b ist ein Temperatur-Zeit-Schaubild dargestellt, an dem die Funktion des erfindungsgemäßen Wärmetauschers in seiner einfachsten Ausführung, d. h. ausschließlich mit einer Arbeitsmediumfüllung, erläutert wird.

Die Temperaturverläufe in Fig. 7a werden bei einer aufgeladenen Brennkraftmaschine mit einem Hubvolumen von rund 6 Litern, einem Wasserinhalt im Wärmetauscher von 2 Litern und einem Druckverhältnis von der Verbrennungsluft von 1 : 1,8 bei einem Beschleunigungsvorgang im mittleren Drehzahlbereich erzielt. Der Temperaturverlauf nach der Kurve 17 wird ohne, der nach der Kurve 18 mit dem erfindungsgemäßen Wärmetauscher erreicht. Der Temperaturverlauf nach der Kurve 19 stellt den Temperaturverlauf des Wassers im Wärmetauscher dar.

Wie die Kurve 19 zeigt, wird bei den oben beschriebenen Parametern das Wasser in ca. 30 sek um rund 25 °C erwärmt. Diese Wärme wird der Verbrennungsluft entzogen, die bei einer Verdichtereingangstemperatur von ca. 20 °C und einer Verdichterausgangstemperatur von ca. 100 °C anfänglich um ca. 35 °C bis 40 °C und am Ende des Beschleunigungsvorganges (nach 30 sek) noch um 20 °C kühler ist als ohne Wärmetauscher (Vergleich der Kurven 17 und 18). Dadurch erhält die Brennkraftmaschine aufgrund des erfindungsgemäßen Wärmetauschers etwa 10 % mehr Verbrennungsluft. Beim anschließenden Entlastungsvorgang (von 30 sek bis 60 sek) bleibt die Verbrennungsluft noch um ca. 15 °C wärmer als ohne Kühlung. Während des gesamten Vorganges beträgt die Temperaturschwankung der Verbrennungsluft ca. 80 °C ohne und nur ca. 50 °C mit dem erfindungsgemäßen Wärmetauscher.

In Fig. 7b ist der gleiche Vorgang bei einem Wärmetauscher mit Stearinfüllung (Kurve 19') dargestellt. Einem Phasenwechsel im Temperaturbereich von 52 °C entspricht etwa die gleiche Wärmekapazität wie die des Wasser bei einem Temperaturanstieg von 30 °C, so daß in diesem Fall die volle Kühlwirkung über die gesamte Beschleunigungsperiode andauern würde, da ein Temperaturanstieg des Stearins während dieser Zeit noch nicht erfolgt.

Wie ein Vergleich der Kurvenverläufe 17 und 18 in Fig. 7b zeigt, wird zu Beginn des Beschleunigungsvorganges ein Temperaturanstieg von ca. 35 °C und am Ende (nach 30 sek) ein Temperaturunterschied von ca. 30 °C durch den erfindungsgemäßen Wärmetauscher erzielt. Am Ende des Entlastungsvorganges (nach 30 sek) bleibt die Verbrennungsluft noch um ca. 20 °C wärmer. Bei dem gesamten Vorgang beträgt die Temperaturschwankung der Verbrennungsluft nur noch ca. 30 °C.

Durch die Schaubilder wird deutlich, daß durch den erfindungsgemäßen Wärmetauscher, dessen Arbeitsmedium die aufgenommene Wärme nur speichert, um sie später an die abgekühlte Verbrennungsluft wieder abzugeben, also nur ein Wärmetausch mit der Verbrennungsluft besteht, eine wesentliche Vergleichmäßigung der Verbrennungsluft mit einfachen Mitteln erzielt wird.

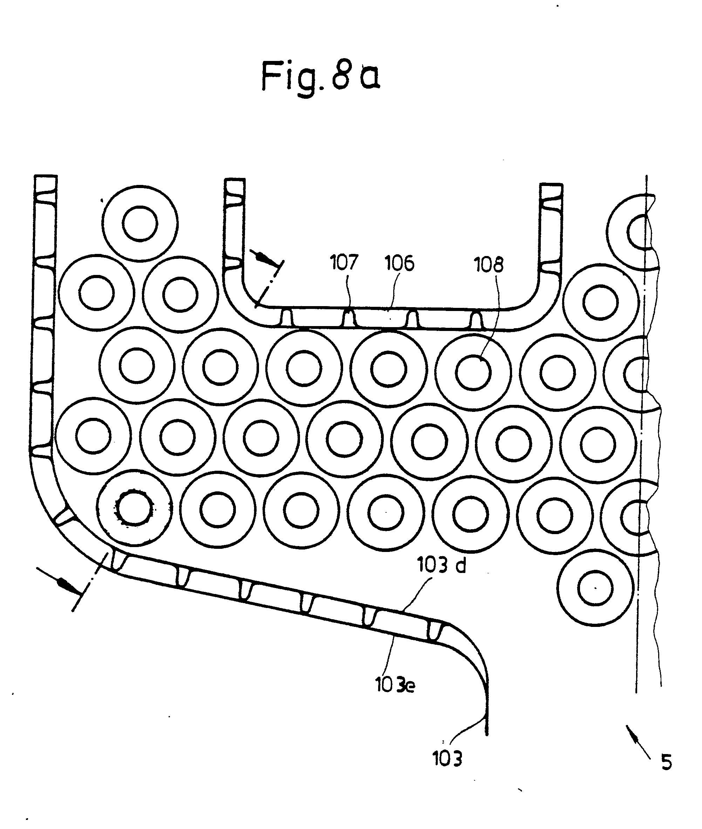

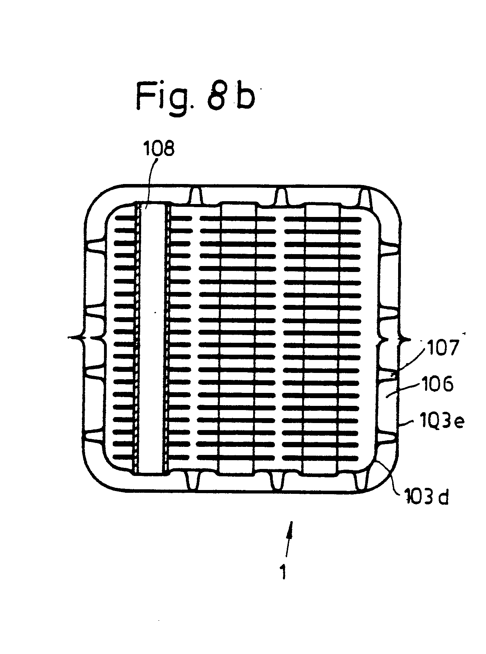

In Fig. 8a und 8b ist eine alternative Ausführungsform der Ladeluftsammelleitung 5 im Schnitt dargestellt. Hierbei wird das Gehäuse 103 der Ladeluftsammelleitung 5 durch Doppelwandungen 103d und 103e gebildet, in deren Zwischenraum 106 ein Arbeitsmedium mit hoher Wärmekapazität eingeschlossen ist. Die Wandung 103d weist Noppen 107 auf, die der Vergrößerung der Wärmeaustauschfläche und als Abstandshalter zur Wandung 103e dienen. Innerhalb der Ladeluftsammelleitung 5 sind mit dem Arbeitsmedium gefüllte Rippenrohre 108 vorgesehen, die mit dem Zwischenraum 106 der Gehäusedoppelwandungen 103d und 103e verbunden sind.

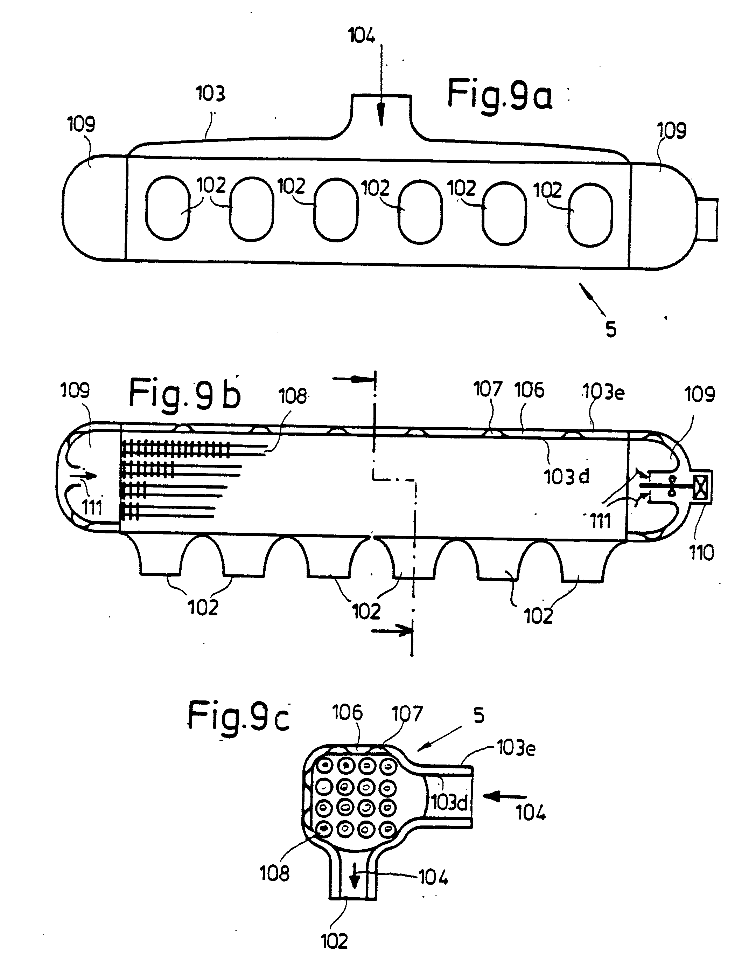

Die Fig. 9a bis 9c zeigen eine weitere Ausführungsform der Ladeluftsammelleitung 5 für eine Sechszylinder-Brennkraftmaschine in drei verschiedenen Ansichten. Fig. 9a zeigt eine Seitenansicht der Ladeluftsammelleitung 5. Bei diesem Ausführungsbeispiel sind innerhalb der Ladeluftsammelleitung 5 zwei Zusatzbehälter 109 vorgesehen.

Die Querschnittsdarstellung nach Fig. 9b verdeutlicht das Ausführungsbeispiel nach Fig. 9a. Die Ladeluftsammelleitung 5 ist doppelwandig, 103d, 103e, ausgebildet, im Zwischenraum 106 ist das Arbeitsmedium enthalten und die Wandung 103d weist Noppen 107 auf. Innerhalb der Ladeluftsammelleitung 5 sind zwei Zusatzbehälter 109 vorgesehen, die mit dem Zwischenraum 106 und den Rippenrohren 108 offen verbunden sind. Eine Umwälzpumpe 110 stellt die Umwälzung des Arbeitsmediums sicher, wobei das Arbeitsmedium im Pfeilrichtung 111 durch den Zwischenraum 106, die Rippenrohre 108 und die Zusatzbehälter 109 strömt. Hierbei können nicht näher dargestellte Thermostatventile vorgesehen sein, die die Durchströmmenge des Arbeitsmediums temperaturabhängig regeln.

In Fig. 9c ist die Ladeluftsammelleitung 5 nach Fig. 9a und 9b in einer geschnittenen Vorderansicht dargestellt.

## Patentansprüche

1. Aufgeladene Brennkraftmaschine mit einem Wärmetauscher (3) zur Kühlung oder Vorwärmung der Verbrennungsluft, wobei der Wärmetauscher (3) im Strömungsbereich der Verbrennungsluft angeordnete Wärmeaustauschelemente aufweist, die mit einem zumindest im Teilbetrieb flüssigen Arbeitsmedium gefüllt sind und mit diesem Arbeitsmedium ein abgeschlossenes System bilden, dadurch gekennzeichnet, daß die Wärmeaustauschelemente als Wärmespeicherelemente ausgebildet sind und daß das in sich abgeschlossene System von Wärmespeicherelementen und wärmespeicherndem Arbeitsmedium innerhalb des Wärmetauschers (3) im Strömungsbereich der Verbrennungsluft liegt und im gesamten Betriebsbereich der Brennkraftmaschine (1) nur mit der Verbrennungsluft im Wärmeaustausch steht, und daß die Wärmespeicherelemente untereinander verbunden sind und ein Ausgleichsvolumen zum Druckausgleich aufweisen.

2. Brennkraftmaschine nach Anspruch 1, dadurch gekennzeichnet, daß das Arbeitsmedium im Arbeitstemperaturbereich als Latentspeicher arbeitet, indem es einen Phasenwechsel oder einen mit einer chemischen Reaktion verbundenen Wärmeumsatz aufweist.

3. Brennkraftmaschine nach Anspruch 2, dadurch gekennzeichnet, daß als Arbeitsmedium Stearin verwendet ist.

4. Brennkraftmaschine nach Anspruch 2, dadurch gekennzeichnet, daß als Arbeitsmedium Glyzerin verwendet ist.

5. Brennkraftmaschine nach Anspruch 2, dadurch gekennzeichnet, daß als Arbeitsmedium ein Salzhydrat verwendet ist.

6. Brennkraftmaschine nach Anspruch 1, dadurch gekennzeichnet, daß das Arbeitsmedium als Adsorptionsspeicher wirkt, indem es die Verdampfungswärme eines geeigneten Stoffes speichert.

7. Brennkraftmaschine nach einem der Ansprüche 1 bis 6, dadurch gekennzeichnet, daß die die Verbrennungsluft von dem Arbeitsmedium trennenden Wände der Wärmeaustauschelemente des Wärmetauschers (3) verrippt sind und aus einem Material mit hoher Wärmeleitfähigkeit bestehen.

8. Brennkraftmaschine nach einem der Ansprüche 1 bis 7, dadurch gekennzeichnet, daß die Wärmeaustauschelemente Rippenrohre (8, 9.1, 108) sind.

9. Brennkraftmaschine nach Anspruch 8, dadurch gekennzeichnet, daß die Rippenrohre (9.1) innen und außen verrippt sind.

10. Brennkraftmaschine nach einem der Ansprüche 1 bis 9, dadurch gekennzeichnet, daß die Wärmeaustauschelemente mit zumindest einem innerhalb mit dem Arbeitsmedium gefüllten Zusatzbehälter (12, 109) verbunden sind.

11. Brennkraftmaschine nach einem der Ansprüche 1 bis 10, dadurch gekennzeichnet, daß die Ladeluftsammelleitung (5) ganz oder teilweise doppelwandig (103d, 103e) ausgebildet ist und den Wärmetauscher bildet, wobei im Zwischenraum (106) der Doppelwandungen (103, 103e) das Arbeitsmedium eingeschlossen ist.

12. Brennkraftmaschine nach einem der Ansprüche 5 bis 11, dadurch gekennzeichnet, daß die als Rippenrohre vorgesehenen Wärmeaustauschelemente parallel oder quer zur Längsachse der Ladeluftsammelleitung (5) in dieser angeordnet sind und mit der Ladeluftsammelleitung (5) den Wärmetauscher bilden.

## Claims

1. A supercharged internal combustion engine fitted with a heat exchanger (3) for cooling or preheating the combustion air, the heat exchanger (3) comprising heat exchange elements arranged in the flow path of the combustion air and filled with a working medium which over at least a part of the engine's operating range is liquid, the exchange elements and the working medium forming a self-contained system, characterized in that the exchange elements are arranged to act as heat accumulators, that the self-contained system of the accumulators and heat-accumulating working medium is arranged inside the heat exchanger (3) in the flow path of the combustion air and is, over the engine's (1) entire operating range, in heat exchange solely with the combustion air, and in that the accumulators are interconnected and have a balancing volume so as to equalize the pressure.

2. An internal combustion engine according to claim 1, characterized in that the working medium, by virtue of a phase change or as a result of heat generated by a chemical reaction, functions at the operating temperatures as a latent heat accumulator.

3. An internal combustion engine according to claim 2, characterized in that the working medium is stearin.

4. An internal combustion engine according to claim 2, characterized in that the working medium is glycerin.

5. An internal combustion engine according to claim 2, characterized in that the working medium is a hydrated salt.

6. An internal combustion engine according to claim 1, characterized in that the working medium acts as an absorbent accumulator by accumulating the vaporization heat of a suitable substance.

7. An internal combustion engine according to any of the claims 1 to 6, characterized in that the walls of the heat exchanger's (3) exchange elements separate the combustion air from the working medium, that they are ribbed and made of a material of high thermal conductivity.

8. An internal combustion engine according to any of the claims 1 to 7, characterized in that the exchange elements are ribbed tubes (8, 9.1, 108).

9. An internal combustion engine according to claim 8, characterized in that the ribbed tubes (9.1) are internally and externally ribbed.

10. An internal combustion engine according to any of the claims 1 to 9, characterized in that the exchange elements are connected to at least one auxiliary vessel (12, 109) filled with the working medium.

11. An internal combustion engine according to any of the claims 1 to 9, characterized in that the charging air manifold (5) is entirely or partly double-walled (103d, 103e) and forms the heat exchanger, and in that the working medium is enclosed in the space (106) between the two walls (103, 103e).

12. An internal combustion engine according to any of the claims 5 to 11, characterized in that the ribbed tubes used as the exchange elements are arranged in the charging air manifold (5) parallel with or transversely to its longitudinal axis and form together with the manifold (5) the heat exchanger.

### Revendications

1. Moteur à combustion interne suralimenté avec un échangeur thermique (3) pour refroidir ou bien pour préchauffer l'air comburant, cet échangeur thermique (3) comportant des éléments d'échange thermique disposés dans la zone d'écoulement de l'air comburant, et qui sont remplis d'un fluide de travail liquide au moins en fonctionnement partiel, et qui forment avec ce fluide de travail un circuit fermé, moteur caractérisé en ce que les éléments d'échange thermique sont des éléments accumulateurs de chaleur et que le système fermé de ces éléments accumulateurs de chaleur et du fluide de travail accumulant la chaleur, à l'intérieur de l'échangeur thermique (3) se situe dans la zone d'écoulement de l'air comburant et est seulement en échange thermique avec l'air comburant dans l'ensemble du domaine de fonctionnement du moteur à combustion interne (1), et que les éléments accumulateurs de chaleur sont reliés entre eux et comportent un volume de compensation pour la compensation de la pression.

2. Moteur à combustion interne selon la revendication 1, caractérisé en ce que le fluide de travail intervient dans la gamme de température de fonctionnement comme accumulateur latent du fait qu'il comporte un changement de phases ou bien une conversion thermique en relation avec une réaction chimique.

3. Moteur à combustion interne selon la revendication 2, caractérisé en ce que de la stéarine est utilisée comme fluide de fonctionnement.

4. Moteur à combustion interne selon la revendication 2, caractérisé en ce que de la glycérine est utilisée comme fluide de fonctionnement.

5. Moteur à combustion interne selon la revendication 2, caractérisé en ce qu'un hydrate salin est utilisé comme fluide de fonctionnement.

6. Moteur à combustion interne selon la revendication 1, caractérisé en ce que le fluide de fonctionnement agit comme accumulateur à adsorption, du fait qu'il accumule la chaleur de vaporisation d'une substance appropriée.

7. Moteur à combustion interne selon une des revendications 1 à 6, caractérisé en ce que les parois des éléments d'échange thermique de l'échangeur thermique (3), qui séparent l'air comburant du fluide de travail, sont nervurées et sont constituées d'un matériau ayant une conductibilité thermique élevée.

8. Moteur à combustion interne selon une des revendications 1 à 7, caractérisé en ce que les éléments d'échange thermique sont des tubes nervurés (8, 9.1, 108).

9. Moteur à combustion interne selon la revendication 8, caractérisé en ce que les tubes nervurés (9.1) sont nervurés à l'intérieur et à l'extérieur.

10. Moteur à combustion interne selon une des revendications 1 à 9, caractérisé en ce que les éléments d'échange thermique sont reliés à au moins un réservoir supplémentaire (12, 109) rempli intérieurement par le fluide de travail.

11. Moteur à combustion interne selon une des revendications 1 à 10, caractérisé en ce que la canalisation (5) collectrice d'air d'alimentation, est en totalité ou partiellement à double paroi (103d, 103e) et constitue l'échangeur thermique, le fluide de travail étant enfermé dans l'espace intermédiaire (106) entre les doubles parois (103, 103e).

12. Moteur à combustion interne selon une des revendications 5 à 11, caractérisé en ce que les éléments d'échange thermique prévus sous la forme de tubes nervurés sont disposés dans la canalisation (5) collectrice d'air d'alimentation, parallèlement ou transversalement par rapport à l'axe longitudinal de cette canalisation et constituent avec cette canalisation (5) collectrice de l'air d'alimentation, l'échangeur thermique.

# Fig. 1

0 111 487

# Fig. 2a

# Fig. 2b

Fig. 3a

6

8

3

7

Fig. 3 b

8    8,1

7

6

Fig. 3c

8.1

7

6

8

Fig. 4 a

# Fig. 4 b

9.2

7

9.1

# Fig. 4 c

6

9.1          7

# Fig. 4 d

6

9.2

9.1          7

Fig. 5a

3

6

6

11

4

10

7

Fig. 5 b

10.1

10

10.1

10

6

10.1

6

6

6

10

11.1

6

11

7

3

Fig. 5 c

10

6

7

10.1

7

# Fig. 6 a

# Fig. 6 b

# Fig. 6 c

Fig. 7a

Fig. 7b

# Fig. 8 a

# Fig. 8 b

Fig.9a

Fig.9 b

Fig.9c